# FASCICULE DE BREVET EUROPEEN

(11) **EP 3 415 780 B1**
(45) Date de publication et mention de la délivrance du brevet: **01.01.2020**
(21) Numéro de dépôt: 18173348.6
(22) Date de dépôt: 18.05.2018
(51) Int. Cl.: F16D 48/06

(54) **PROCEDE DE DIAGNOSTIC DE L'USURE D'UN EMBRAYAGE**
DIAGNOSEVERFAHREN DES VERSCHLEISSES EINER KUPPLUNG
METHOD FOR DIAGNOSING CLUTCH WEAR

(30) Priorité: 16.06.2017 FR 1755491
(43) Date de publication de la demande: 19.12.2018
(73) Titulaire: RENAULT s.a.s., 92100 Boulogne-Billancourt (FR)
(72) Inventeur: RIESENMEY, Fabrice, 91780 CHALO SAINT MARS (FR); RIVET, Pierre, 91290 ARPAJON (FR)

(56) Documents cités:
- EP-A1- 1 482 196
- WO-A1-2004/040159
- DE-A1- 19 815 259
- US-A1- 2003 022 759

## Description

La présente invention concerne un procédé de diagnostic d'embrayage, en particulier d'un véhicule automobile.

Plus précisément, elle a pour objet un procédé de diagnostic de l'usure d'un embrayage, reposant sur la surveillance permanente de grandeurs physiques liées au fonctionnement de l'embrayage, et à l'état de sa friction.

Ce procédé s'applique à tous les systèmes d'embrayage secs ou humides, à commande manuelle ou automatisée.

La nécessité de disposer d'un diagnostic fiable et prévisionnel sur l'état d'usure d'un embrayage, apparaît dans des domaines variés, tels que l'automobile, le matériel agricole, les travaux publics, la marine ou l'aéronautique.

Le temps d'usure des systèmes d'embrayage est variable, selon la façon dont ils sont utilisés, et leur application. Leur remplacement, notamment sur les véhicules routiers, est le plus souvent imprévu. Son coût financier dépend en partie du degré de destruction de l'embrayage, et de l'impact de sa destruction sur d'autres composants de la chaîne cinématique du véhicule. Une friction d'embrayage usée, peut en effet entraîner une dégradation du plateau d'embrayage, ou du volant moteur. Dans certains domaines industriels, le coût induit d'un remplacement d'embrayage peut dépendre d'autres facteurs, comme la date et la durée de l'arrêt de certaines machineries, etc.

Dans un embrayage de véhicule à commande manuelle, certains indices d'usure, comme la dureté de la pédale, où certains « micro glissements » lors de la transmission de forts couples, sont différemment perçus, selon la sensibilité de l'utilisateur.

Dans un embrayage à commande automatisée ou robotisée, certaines fonctions algorithmiques analysent la dissipation d'énergie, de manière plus ou moins précise. L'objectif général de l'évaluation, est de gérer le contrôle de la transmission de couple, et d'y apporter des correcteurs adaptatifs selon la qualité de la transmission. Cette évaluation sert également à estimer la température des composants, selon un modèle algorithmique déterminé en laboratoire, et pour une gamme de composants ciblés.

Par la publication FR 2 833 667, on connaît un système de diagnostic d'usure d'embrayage d'un véhicule automobile, comportant un disque d'embrayage muni de garnitures, et d'un ressort de garnitures, disposé entre celles-ci. Le système comporte en outre des moyens de commande du serrage et du desserrage du disque d'embrayage, et des moyens de détermination d'une courbe caractéristique de l'embrayage, reliant le couple transmissible à la position des moyens de commande. Une routine alimente un compteur d'usure du système à chaque évaluation. Des moyens de diagnostic déterminent si une opération de maintenance est nécessaire, à partir de la courbe caractéristique de l'embrayage. Le couple transmis est scruté selon les positions intermédiaires du système. Suivant le positionnement de l'enveloppe de positions mesurées par rapport aux positions nominales, une confirmation d'usure est donnée.

Avec la méthode citée, l'utilisateur n'a aucune information sur le capital restant de l'embrayage, ni sur le risque de panne à court terme, ni sur une intervention de maintenance à prévoir à très court terme.

La présente invention vise à pallier ces insuffisances du système de diagnostic d'usure d'embrayage connu, pour déterminer la nécessité d'intervenir de manière prédictive, en tenant compte de la façon dont l'embrayage est sollicité habituellement.

Son objectif est d'évaluer l'usure d'un embrayage, et de prévoir sa fin de vie. Ce procédé peut aussi être exploité pour informer en avance de phase un service de maintenance, de manière à planifier des arrêts de machine et des interventions.

Conformément à l'invention :
- les grandeurs surveillées sont analysées en temps réel, de manière à identifier des sollicitations correspondant à des phases patinage, pour lesquelles on extrait le temps de patinage, la quantité d'énergie dissipée dans l'embrayage, et la température moyenne de sa friction pendant la sollicitation,
- le degré de sévérité de chaque sollicitation identifiée, est évalué en fonction de l'analyse des valeurs surveillées pendant les phases de patinage, de manière à classer celles-ci par rapport à des degrés de référence,
- les quantités d'énergie dissipées sont cumulées dans des compteurs d'énergie spécifiques, selon le degré de sévérité de chaque sollicitation, et
- une alerte sur l'état critique de l'embrayage est déclenchée à partir de l'observation simultanée de tous les compteurs d'énergie cumulée.

Ce procédé assure un diagnostic précis, alertant le conducteur, ou les services de maintenance, sur les opérations à effectuer. Il permet d'éviter que l'embrayage tombe brutalement en panne. Le conseil prédictif, qui est fourni à l'utilisateur, lui permet de s'organiser, en vue d'éviter des enchaînements de destruction de l'embrayage, et de certains organes mécaniques impactés par son niveau d'usure. L'utilisateur bénéficie grâce à l'invention, d'une information synthétique sur l'état de fonctionnement de l'embrayage, et sur son potentiel d'utilisation future.

La présente invention sera mieux comprise à la lecture de la description suivante, d'un mode de réalisation non limitatif de celle-ci, en se reportant aux dessins annexés sur lesquels :
- la figure 1 est une cartographie de « *potentiel de vie* » d'un embrayage selon différents types de sollicitation,
- la figure 2 visualise l'état de compteurs mémorisés dans le calculateur de l'embrayage ou de la transmission, et
- la figure 3 illustre la détermination d'un profil d'utilisateur de l'embrayage.

La description ci-dessous, illustre l'application du procédé sur un embrayage piloté par un système dédié (calculateur), par exemple un embrayage à commande robotisée ou automatisée de véhicule automobile, motocycle, tricycle, engin de travaux public, poids lourd, etc. Cependant, l'application de l'invention ne se limite pas à ces derniers, car elle trouve la même utilité sur un embrayage commandé directement par un conducteur de véhicule, à partir d'une pédale de débrayage. Le diagnostic peut alors être géré par un calculateur du véhicule, tel que l'unité de contrôle de l'habitacle.

Dans le cas non limitatif du diagnostic de l'état, ou du niveau d'usure d'un embrayage de véhicule, différentes informations concernant cet embrayage et son environnement, sont rassemblées, soit directement par l'ordinateur de bord du véhicule, soit par consultation de la mémoire vive du calculateur hébergeant les algorithmes de contrôle de l'embrayage, soit à partir d'un calculateur émetteur, soit par smartphone ou autre.

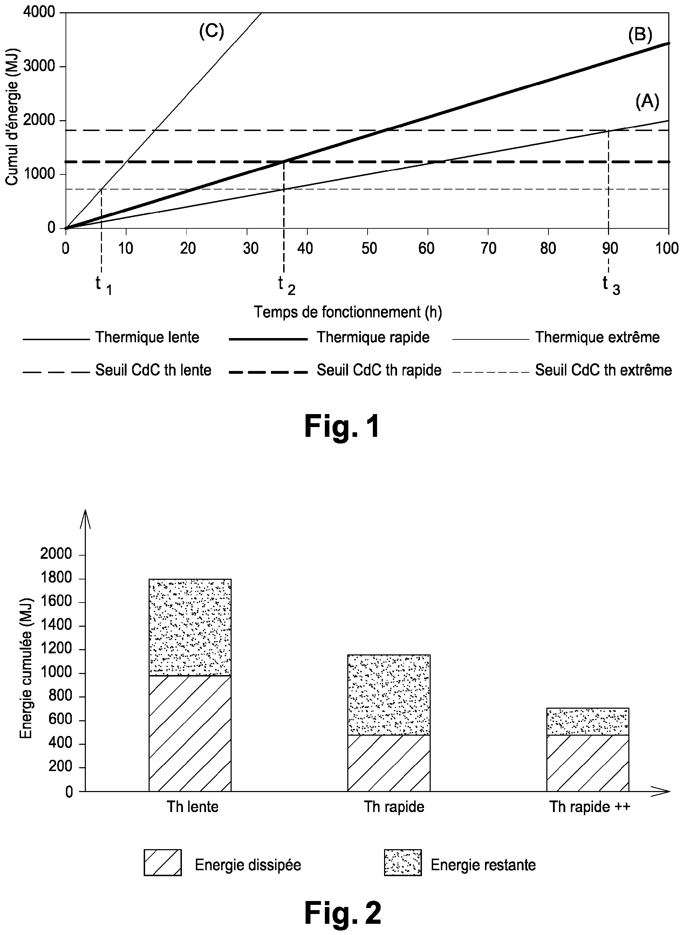

Le procédé repose sur la surveillance permanente de grandeurs physiques liées au fonctionnement de l'embrayage, et à l'état de sa friction. Les principales étapes conduisant au diagnostic recherché, peuvent être tout ou partie des suivantes.
a) Surveillance permanente de certaines grandeurs physiques relatives à l'embrayage : temps de patinage, énergie dissipée dans l'embrayage en fonction du temps, température de l'embrayage, etc.
b) Détection des phases de patinage, et extraction (ou calcul) de grandeurs physiques pendant ces phases de sollicitation particulières de l'embrayage.
c) Détermination de différents (par exemple trois) degrés de sévérité des phases de sollicitation, par rapport à la quantité d'énergie dissipée au cours de celles-ci.
d) Classement de chaque sollicitation selon la quantité d'énergie dissipée mesure d'énergie dissipée au cours de celle-ci par référence aux degrés de sévérité définis.
e) Mémorisation de la quantité d'énergie cumulée au cours des phases de sollicitation successives pour chaque degré de sévérité sur un histogramme, tel que celui de la figure 2.
f) Calcul d'une valeur représentative de la capacité brute de fonctionnement restante de l'embrayage organe, en fonction de l'état physique d'un composant d'usure (par exemple épaisseur de matière encore présente sur une garniture de friction).
g) Analyse du type de conduite de l'utilisateur (mode d'utilisation courant ou « *profil utilisateur* »).
h) Modulation de la valeur brute de « *capacité de fonctionnement restante »* selon le « *profil utilisateur »* identifié.
i) Etude de valeurs dérivées des valeurs d'énergie cumulée pour chaque degré de sévérité, en fonction du temps (par exemple en Méga Joules par heure, par jour, par Km, ou par temps cumulé de patinage.
j) Arbitrage et confirmation des tendances pour chaque degré de sévérité, avec pondération éventuelle par la *« capacité de fonctionnement restante »* de l'embrayage.
k) Information prédictive sur l'état d'usure de l'embrayage : alertes à partir de la mémoire vive du calculateur, du tableau de bord du véhicule, d'un smartphone, etc.

Dans un embrayage sec ou humide de véhicule, on trouve toujours une garniture de friction (ou friction), faisant face à un plateau d'appui. L'ensemble est contraint sur le volant moteur, par un système de ressort. Ces composants sont dimensionnés à l'origine pour fournir une certaine quantité de travail, déterminant leur durée de vie. L'usure se concentre principalement au point de friction volant moteur / friction / plateau d'appui.

La capacité de fonctionnement initiale (ou « *potentiel de vie* ») de l'embrayage, s'exprime par une courbe d'énergie dissipée en fonction du temps passé en phases de sollicitation. Cette courbe met en évidence les limites d'utilisation de l'embrayage, avant sa destruction. On peut définir plusieurs degrés de sévérité, par exemple trois dans l'exemple décrit, correspondant respectivement à une dissipation thermique lente, une dissipation thermique rapide, et une dissipation thermique extrême dans l'embrayage. Par référence à ces degrés de sévérité, on établit trois courbes dans l'exemple de la figure 1 :
- la première (courbe A), dite courbe de thermique lente, correspond à une utilisation normale de l'embrayage,
- la deuxième (courbe B), dite courbe de thermique rapide, correspond à une utilisation moins maîtrisée : elle fait intervenir plus de patinage et plus de couple, et
- la troisième (courbe C), dite courbe de thermique extrême, correspond à des utilisations d'incident, comme des maintiens en pente au point de patinage, ou des points de calage sur boîte automatique.

Sur ces courbes, t₁ est le temps de vie de l'embrayage face à des sollicitations extrêmes, t₂ le temps de vie de l'embrayage face à de fortes sollicitations, et t₃ le temps de vie de l'embrayage face à de faibles sollicitations. Les seuils indiqués sont arbitraires, et se basent sur une dissipation thermique d'environ 30 kJ dissipés pendant 5 secondes en « thermique lente », d'environ 50 kJ dissipés pendant 5 secondes en « thermique rapide », et d'environ 35 kJ dissipés pendant 1 seconde en « thermique extrême ».

Ces courbes constituent des données constantes pour le diagnostic d'usure de l'embrayage. Elles sont introduites initialement dans le calculateur concerné. D'autres données d'entrée sont regroupées, par exemple dans une cartographie réalisée à partir de ces courbes. La cartographie donne, pour chaque type de sollicitation, une courbe caractéristique du taux d'usure, en fonction de la température. Dans la cartographie, les courbes sont en trois dimensions (temps, énergie, température). Elles traduisent fait suivant : pour une même dissipation d'énergie, plus la température est élevée (par exemple en passant de 100° à 200°), plus le matériau de friction est dégradé.

L'invention prévoit en plus, d'appliquer un coefficient correcteur sur l'énergie dissipée, afin de rendre compte de ce phénomène : si par exemple, la dissipation réelle est de 30 kJ à 200°C, il peut être utile d'adopter une correction pour prendre en considération une dissipation de 35 kJ. Lorsqu'une phase de sollicitation est identifiée avec une énergie dissipée de 50 kJ, un temps de patinage de 2 secondes, (soit 25 kJ/s), et une température de 50°C, le degré de sévérité le plus proche sur la figure 1 (sans appliquer de correction), est celui de la thermique extrême. On ajoute 10 kJ au compteur « *thermique extrême ».*

Lorsqu'elles sont disponibles directement sur le réseau de transmission de données du véhicule, les deux variables, énergie dissipée par l'embrayage, et température estimée de la friction, sont récupérées et exploitées en permanence. Lorsqu'elles ne sont pas directement disponibles, il est possible de les calculer à partir de mesures du couple moteur fourni, de calculs du couple moteur inertiel, ou encore du couple moteur appliqué sur le plateau d'appui de l'embrayage. Ces mesures sont effectuées par exemple toutes les 10 millisecondes. Le régime de la friction, ou celui de l'arbre d'entrée de la boîte de vitesses, sont également mesurés. Le point de léchage de l'embrayage, peut être mesuré par un capteur de position, ou calculé par un couple-mètre observant la tension de la chaine cinématique, au niveau de l'arbre d'entrée ou de sortie de la boîte. L'observation du régime moteur peut s'effectuer à partir de calculs de gradients de régime. Enfin, la puissance dissipée est également nécessaire, et s'introduit aussi par calcul.

Chaque sollicitation (phase de patinage), qui a été identifiée, ouvre une opération d'acquisition de données exploitées pour aboutir au diagnostic, en liaison avec les données constantes mentionnées ci-dessus et avec les données acquises lors des phases de sollicitation précédentes. Elle constitue une itération dans l'acquisition de données cumulatives sur le fonctionnement de l'embrayage en situation de patinage. A chaque itération, on récupère le temps de patinage, l'énergie dissipée et la température moyenne de la friction au cours de la sollicitation.

L'opération qui suit, consiste à déterminer la typologie de la sollicitation détectée, selon les niveaux de sévérité prédéfinis. Avec les trois degrés de sévérité de l'exemple décrit, l'utilisation de l'embrayage est considérée comme normale, si on a détecté une « *thermique lente* » pendant la sollicitation. Elle est considérée comme surchargée pour une *« thermique rapide* », ou d'abusive pour une « *thermique extrême ».* Chaque itération incrémente un compteur correspondant au degré de sévérité de la sollicitation. La figure 2, qui décrit l'état des trois compteurs dans un cas pratique, permet de définir le mode d'utilisation courant de l'embrayage, ou « profil de l'utilisateur ».

L'état des compteurs peut être mémorisé temporairement dans une mémoire vive (RAM), avant son envoi vers la mémoire interne (ROM) du calculateur, pour la mettre à jour. A chaque envoi, le travail total accompli par l'embrayage en phase de sollicitation, est comparé avec le potentiel maximum prévu par son cahier des charges. Cette comparaison s'effectue entre le travail déjà accompli sur l'histogramme (cf. figure 2), correspondant au degré de sévérité considéré. On sait alors évaluer la capacité de fonctionnement restante de l'embrayage sur le type de sollicitation considéré (thermique « lente », « rapide » ou « extrême »). Un nouveau diagnostic est effectué à chaque sollicitation de l'embrayage, pour déterminer si l'embrayage peut encore supporter la répétition de sollicitations analogues à celle qui vient d'être détectée.

Dans le but de prévoir l'atteinte du seuil maximum calibré d'énergie dissipée, définissant la fin de vie de l'embrayage, on peut aussi apprécier la tendance de la dissipation d'énergie, à partir de calculs de dérivée sur l'énergie dissipée. Ces données sont mémorisées à chaque remise à zéro du calculateur. Dans une gestion optimisée des données, l'incrémentation en fonction du type de sollicitation (degré de sévérité), peut s'effectuer sous tension. La mémorisation du dernier calcul peut s'effectuer lors de la coupure du contact, son transfert en mémoire vive, pendant la période de coupure, et la prise en compte des valeurs mémorisées lors de la mise sous tension suivante.

Selon une autre disposition de l'invention, l'évolution des compteurs peut être pondérée selon l'estimation de la capacité de fonctionnement restante de l'embrayage basée sur l'état physique de sa friction. L'arbitrage final repose sur l'analyse des phases de sollicitation identifiées, et sur leur exploitation. Cet arbitrage vise à déterminer si la fin vie de l'embrayage est proche, pour en alerter l'utilisateur. Il peut être *statique* ou *dynamique.* Le diagnostic statique s'effectue sur la base des quantités d'énergie cumulée, et de la capacité de fonctionnement restante sur chaque compteur. Dans le diagnostic dynamique, les dérivées des quantités d'énergie cumulées en fonction du temps sont analysées, pour se baser sur l'évolution des compteurs. Le diagnostic dynamique exploite une valeur de gradient d'énergie dissipée dans l'embrayage dans le temps. Il prend en compte la tendance de la dissipation d'énergie à partir des valeurs dérivées mentionnées plus haut, pour chaque degré de sévérité.

Dans les deux cas, les valeurs prises en compte peuvent être pondérées par des coefficients liés au mode d'utilisation courant, ou profil d'utilisation. Le mode d'utilisation de l'embrayage est déterminé à partir de l'analyse des compteurs, pour prévoir l'imminence de sa destruction en fonction de l'utilisation habituelle de l'embrayage. L'arbitrage statique est avantageusement utilisé comme une sécurité, en cas de défaillance de l'arbitrage dynamique. Le procédé de diagnostic aboutit le moment venu, à la conclusion que la fin de vie de l'embrayage est proche. Il débouche alors sur une alerte des utilisateurs, par exemple sur le tableau de bord du véhicule, sur un calculateur du véhicule, ou simplement sur un smartphone.

En résumé, les grandeurs surveillées sont analysées en temps réel, de manière à identifier des sollicitations correspondant à phases patinage pour lesquelles on extrait le temps de patinage, la quantité d'énergie dissipée dans l'embrayage, et la température moyenne de sa friction pendant la sollicitation. Les degrés de sévérité de référence sont déterminés à partir de la vitesse de la dissipation de l'énergie dans l'embrayage. Le degré de sévérité de chaque sollicitation identifiée, est évalué en fonction de l'analyse des valeurs surveillées pendant les phases de patinage, de manière à classer celles-ci par rapport à des degrés de référence. Les quantités d'énergie dissipées sont cumulées dans des compteurs d'énergie spécifiques, selon le degré de sévérité de chaque sollicitation. Enfin, une alerte sur l'état l'embrayage est déclenchée lorsque celle-ci est critique, à partir de l'observation simultanée de tous les compteurs.

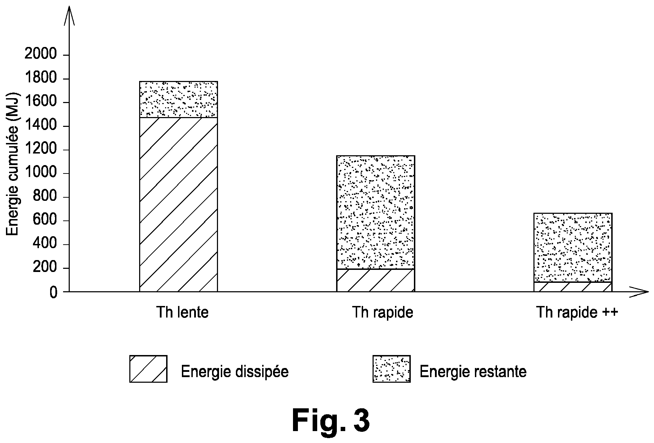

La figure 3 montre comment le mode d'utilisation courant de l'embrayage intervient pour déclencher une alerte. L'état des compteurs correspond à un embrayage, qui n'est pas soumis habituellement à des conditions sévères : la quantité d'énergie cumulée est très faible dans les compteurs *« thermique extrême »* et « *thermique rapide* », ce qui indique que l'utilisateur ménage habituellement son embrayage. Dans ces conditions, l'embrayage peut encore supporter la répétition de sollicitations « *extrêmes* ». Aucune alerte n'est déclenchée, car l'embrayage n'est pas en « fin de vie » au regard de la façon dont il est utilisé. Si au contraire, l'embrayage était utilisé habituellement de manière abusive (pour une même énergie totale dissipée), la même sollicitation de type « extrême », aurait pu déclencher une alerte de destruction imminente de l'embrayage.

Les avantages de l'invention sont nombreux. Avec des moyens de mesure et de communication existants, elle assure une sécurité d'utilisation pour un faible coût, grâce à l'information prédictive de la détérioration de l'embrayage.

## Revendications

1. Procédé de diagnostic de l'usure d'un embrayage reposant sur la surveillance permanente de grandeurs physiques liées au fonctionnement de l'embrayage et à l'état de sa friction, incluant le temps de patinage, l'énergie dissipée dans l'embrayage en fonction du temps, et la température de l'embrayage **caractérisé en ce que** :
- les grandeurs surveillées sont analysées en temps réel de manière à identifier des sollicitations correspondant à des phases de patinage pour lesquelles on extrait, le temps de patinage la quantité d'énergie dissipée dans l'embrayage, et la température moyenne de la friction pendant la sollicitation,
- le degré de sévérité de chaque sollicitation identifiée est évalué en fonction de l'analyse des valeurs surveillées pendant les phases de patinage, de manière à classer celles-ci par rapport à des degrés de référence,
- les quantités d'énergie dissipées sont cumulées dans des compteurs d'énergie spécifiques, selon le degré de sévérité de chaque sollicitation, et
- une alerte sur l'état critique de l'embrayage est déclenchée à partir de l'observation simultanée de tous les compteurs d'énergie cumulée.

2. Procédé de diagnostic selon la revendication 1, **caractérisé en ce que** le mode d'utilisation courant de l'embrayage, déterminé à partir de l'analyse des compteurs, permet de déterminer l'imminence de sa destruction.

3. Procédé de diagnostic selon la revendication 2, **caractérisé en ce qu'**il est effectué à chaque sollicitation de l'embrayage, pour déterminer si l'embrayage peut encore supporter la répétition de sollicitations analogues à celle qui vient d'être détectée.

4. Procédé de diagnostic selon la revendication 1, 2 ou 3, **caractérisé en ce que** les dérivées en fonction du temps, des quantités d'énergie cumulées, sont analysées, de manière à baser le diagnostic sur l'évolution des compteurs.

5. Procédé de diagnostic selon la revendication 4, **caractérisé en ce que** l'évolution des compteurs est pondérée par une estimation de la capacité de fonctionnement restante de l'embrayage, basée sur l'état physique de sa friction.

6. Procédé de diagnostic selon l'une des revendications précédentes, **caractérisé en ce que** les degrés de sévérité de référence sont déterminés en fonction de la vitesse de la dissipation de l'énergie dans l'embrayage.

7. Procédé de diagnostic selon la revendication 6, **caractérisé en ce qu'**on définit trois degrés de sévérité, correspondant respectivement à une dissipation thermique lente, une dissipation thermique rapide, et une dissipation thermique extrême dans l'embrayage.

8. Procédé de diagnostic selon la revendication 7, **caractérisé en ce que** la dissipation thermique est d'environ 30 kJ dissipés pendant 5 secondes en mode thermique lent, d'environ 50 kJ dissipés pendant 5 secondes en mode thermique rapide, et d'environ 35 kJ dissipés pendant 1 seconde en mode thermique extrême.

9. Procédé de diagnostic selon l'une des revendications précédentes, **caractérisé en ce que** l'alerte sur l'état critique de l'embrayage est déclenchée au tableau de bord.

10. Procédé de contrôle selon l'une des revendications, **caractérisé en ce que** l'alerte sur l'état critique de l'embrayage est déclenchée sur un smartphone.

## Patentansprüche

1. Diagnoseverfahren des Verschleißes einer Kupplung, das auf der permanenten Überwachung physikalischer Größen, die mit dem Betrieb der Kupplung und dem Zustand ihres Reibbelags verbunden sind, beruht, umfassend die Schleifzeit, die in der Kupplung in Abhängigkeit von der Zeit abgegebene Energie und die Temperatur der Kupplung, **dadurch gekennzeichnet, dass**:
- die überwachten Größen in Echtzeit analysiert werden, um Beanspruchungen, die Schleifphasen entsprechen, zu identifizieren, für die die Schleifzeit, die Menge der in der Kupplung abgegebenen Energie und die mittlere Temperatur des Reibbelags während der Beanspruchung extrahiert werden,
- der Schweregrad jeder identifizierten Beanspruchung in Abhängigkeit von der Analyse der überwachten Werte während der Schleifphasen bewertet wird, um diese im Verhältnis zu Referenzgraden einzustufen,
- die abgegebenen Energiemengen gemäß dem Schweregrad jeder Beanspruchung in spezifischen Energiezählern kumuliert werden und
- auf Grundlage der simultanen Beobachtung aller Zähler der kumulierten Energie ein Alarm bezüglich des kritischen Zustands der Kupplung ausgelöst wird.

2. Diagnoseverfahren nach Anspruch 1, **dadurch gekennzeichnet, dass** die aktuelle Betriebsart der Kupplung, die auf Grundlage der Analyse der Zähler bestimmt wird, es ermöglicht, das unmittelbare Bevorstehen ihrer Zerstörung zu bestimmen.

3. Diagnoseverfahren nach Anspruch 2, **dadurch gekennzeichnet, dass** es bei jeder Beanspruchung der Kupplung durchgeführt wird, um zu bestimmen, ob die Kupplung der Wiederholung von Beanspruchungen, die der gerade erfassten entspricht, noch standhalten kann.

4. Diagnoseverfahren nach Anspruch 1, 2 oder 3, **dadurch gekennzeichnet, dass** die Ableitungen der kumulierten Energiemengen in Abhängigkeit von der Zeit analysiert werden, damit die Diagnose auf der Entwicklung der Zähler basiert.

5. Diagnoseverfahren nach Anspruch 4, **dadurch gekennzeichnet, dass** die Entwicklung der Zähler anhand einer Schätzung der verbleibenden Betriebskapazität der Kupplung, basierend auf dem physikalischen Zustand ihres Reibbelags, gewichtet wird.

6. Diagnoseverfahren nach einem der vorhergehenden Ansprüche, **dadurch gekennzeichnet, dass** die Referenzschweregrade in Abhängigkeit von der Geschwindigkeit der Energieabgabe in der Kupplung bestimmt werden.

7. Diagnoseverfahren nach Anspruch 6, **dadurch gekennzeichnet, dass** drei Schweregrade definiert werden, die jeweils einer langsamen Wärmeabgabe, einer schnellen Wärmeabgabe und einer extremen Wärmeabgabe in der Kupplung entsprechen.

8. Diagnoseverfahren nach Anspruch 7, **dadurch gekennzeichnet, dass** die Wärmeabgabe im langsamen Wärmemodus über 5 Sekunden ungefähr abgegebenen 30 kJ, im schnellen Wärmemodus über 5 Sekunden ungefähr abgegebenen 50 kJ und im extremen Wärmemodus über 1 Sekunde ungefähr abgegebenen 35 kJ entspricht.

9. Diagnoseverfahren nach einem der vorhergehenden Ansprüche, **dadurch gekennzeichnet, dass** der Alarm bezüglich des kritischen Zustands der Kupplung auf dem Armaturenbrett ausgelöst wird.

10. Diagnoseverfahren nach einem der Ansprüche, **dadurch gekennzeichnet, dass** der Alarm bezüglich des kritischen Zustands der Kupplung auf einem Smartphone ausgelöst wird.

## Claims

1. Method for diagnosing clutch wear, relying on the permanent monitoring of physical parameters associated with the operation of the clutch and with the condition of its friction linings, including the slip time, the energy dissipated in the clutch as a function of time, and the temperature of the clutch, **characterized in that**:
- the parameters monitored are analysed in real time so as to identify clutch operations corresponding to slip phases for which the slip time, the quantity of energy dissipated in the clutch, and the mean temperature of the friction lining during the operation are extracted,
- the degree of severity of each identified clutch operation is evaluated on the basis of the analysis of the values monitored during the slip phases, so as to rank these against reference degrees,
- the quantities of energy dissipated are cumulated in specific energy counters, according to the degree of severity of each clutch operation, and
- an alert as to the critical state of the clutch is triggered on the basis of simultaneous observation of all the cumulated-energy counters.

2. Diagnosis method according to Claim 1, **characterized in that** the current mode of use of the clutch, determined from the analysis of the counters, makes it possible to determine the imminency of its being destroyed.

3. Diagnosis method according to Claim 2, **characterized in that** it is performed each time the clutch is operated, in order to determine whether the clutch can still withstand repeated clutch operations analogous to the one that has just been detected.

4. Diagnosis method according to Claim 1, 2 or 3, **characterized in that** derivatives the cumulative quantities of energy as a function of time are analysed so as to base the diagnosis on the evolution of the counters.

5. Diagnosis method according to Claim 4, **characterized in that** the evolution of the counters is weighted by an estimate of the remaining operating capacity of the clutch, based on the physical condition of its friction linings.

6. Diagnosis method according to one of the preceding claims, **characterized in that** the reference degrees of severity are determined according to the rate at which energy is dissipated in the clutch.

7. Diagnosis method according to Claim 6, **characterized in that** three degrees of severity are defined, these respectively corresponding to slow dissipation of heat, rapid dissipation of heat, and extreme dissipation of heat in the clutch.

8. Diagnosis method according to Claim 7, **characterized in that** the dissipation of heat is around 30 kJ, dissipated over 5 seconds in the slow dissipation mode, around 50 kJ dissipated over 5 seconds in the rapid dissipation mode, and around 35 kJ dissipated over 1 second in the extreme dissipation mode.

9. Diagnosis method according to one of the preceding claims, **characterized in that** the alert as to the critical state of the clutch is triggered on the instrument panel.

10. Test method according to one of the claims, **characterized in that** the alert as to the critical state of the clutch is triggered on a smartphone.
